**Europäisches Patentamt**

**European Patent Office**

**Office européen des brevets**

(19)

(11) **EP 1 508 863 A2**

(12) **EUROPEAN PATENT APPLICATION**

(43) Date of publication:
**23.02.2005 Bulletin 2005/08**

(51) Int Cl.7: **G06F 17/30**

(21) Application number: **04019061.3**

(22) Date of filing: **11.08.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **19.08.2003 JP 2003207912**

(71) Applicant: **Pioneer Corporation**
**Tokyo-to (JP)**

(72) Inventors:
• **Nakamura, Takeshi**
**Tsurugashima-shi Saitama-ken (JP)**

• **Morita, Kouzou**
**Tsurugashima-shi Saitama-ken (JP)**
• **Miyasato, Hajime**
**Tsurugashima-shi Saitama-ken (JP)**

(74) Representative: **Skuhra, Udo, Dipl.-Ing.**
**Reinhard-Skuhra-Weise & Partner GbR**
**Patentanwälte**
**Postfach 44 01 51**
**80750 München (DE)**

(54) **Multimedia contents retrieval system**

(57) A contents retrieval system of the invention includes: a contents database (15) constructed by a plurality of contents groups classified in accordance with classification criteria; a relation information setting unit (12) which sets relation information indicative of relation among contents included in the plurality of contents groups; a relation information database (17) for storing the relation information; and a control unit (14) which selects a plurality of contents having high relation to each other from the plurality of contents stored in the contents database (15) on the basis of the relation information in the relation information database (17) and simultaneously reproducing the selected plurality of contents.

## FIG. 1

**Description**

BACKGROUND OF THE INVENTION

Field of the Invention

The present invention relates to a system for retrieving multimedia contents such as a motion picture, a still picture, sound data, and HTML (Hypertext Markup Language) file.

Description of the Related Art

In a computer, a communication network, and a broadcast network, a large amount of multimedia contents (hereinbelow, simply called "contents") in various forms such as numerical values, characters, still picture, motion picture, sound, and music is distributed. A retrieval system capable of efficiently retrieving contents desired by the user from an enormous number of contents is being demanded. Particularly, an electronic device with a storage device of large capacity is spread because of increase in the capacity of a storage device such as a hard disk drive and reduction in price thereof. In accordance with the spread, the user can collect a number of contents from a communication network or the like and store them into a storage device without considering a capacity of storage device. However, there is a problem such that a work for retrieving desired contents from the number of contents stored and organizing the stored contents is complicated and requires very long time.

For example, a multimedia data retrieval apparatus disclosed in Japanese Patent Application Laid-Open No. 2001-282813 provides a device for efficiently retrieving multimedia data such as an image captured and recorded by a digital camera or the like. The disclosure of US2003069893A1 is incorporated by reference in its entirety. In the multimedia data retrieval system, at least one of position information and time information accompanying multimedia data is associated with an "event" of the multimedia data. When the user designates the position information or time information by using a GUI (Graphical User Interface), the data is retrieved on the basis of the event related to the designated information. On the contrary, by designating the event name, the data is retrieved on the basis of the position information or time information related to the event. For example, for the event name of "Tokyo Olympic", the place and period of the Tokyo Olympic can be associated as place information and time information, respectively.

However, since the retrieval range of the contents is limited, the multimedia data retrieval apparatus has a problem such that it is difficult for the user to efficiently retrieve desired contents in short time. Particularly, a number of contents of different kinds are accumulated and, in the case where the number of retrieval files is large, a problem of long retrieval time occurs. Further, from the viewpoint of operability, there is also a problem that the apparatus lacks user friendliness (ease of use).

SUMMARY OF THE INVENTION

In consideration of the problems, an object of the invention is to provide a contents retrieval system capable of easily retrieving contents desired by the user in short time.

The invention according to claim 1 relates to a contents retrieval system comprising:

a contents database constructed by a plurality of contents groups classified in accordance with classification criteria;
a relation information setting unit which sets relation information indicative of relation among contents included in said plurality of contents groups;
a relation information database constructed by said relation information; and
a control unit which selects a plurality of contents having a high degree of relation with each other from said plurality of contents in said contents database on the basis of said relation information in said relation information database, and reproducing said plurality of contents selected.

BRIEF DESCRIPTION OF THE DRAWINGS

FIG. 1 is a block diagram schematically showing the configuration of a content retrieval system as a first embodiment of the invention;
FIG. 2 is a diagram schematically showing a file system of a content database;
FIG. 3 is a diagram illustrating attribute information recorded in a content information database;

FIG. 4 is a diagram showing attribute information recorded in the content information database;

FIG. 5 is a diagram showing information recorded in a theme database;

FIG. 6 is a diagram showing information recorded in a related information database;

FIG. 7 is a block diagram schematically showing the configuration of a retrieval interface;

FIG. 8 is a flowchart schematically showing the procedure of a process of recording new contents;

FIG. 9 is a flowchart schematically showing the procedure of a related information obtaining process;

FIG. 10 is a flowchart schematically showing the procedure of a relation degree calculating process by time;

FIG. 11 is a flowchart schematically showing the procedure of a relation degree calculating process by a place;

FIG. 12 is a flowchart schematically showing the procedure of a relation degree calculating process by a keyword;

FIG. 13 is a flowchart schematically showing the procedure of a theme extracting process;

FIG. 14 is a flowchart schematically showing an example of the procedure of a retrieval support process;

FIG. 15 is a flowchart schematically showing the procedure of a theme selecting process;

FIG. 16 is a diagram showing an example of a theme selection screen;

FIG. 17 is a diagram showing an example of a navigation screen;

FIG. 18 is a flowchart schematically showing the procedure of various changing processes;

FIG. 19 is a diagram showing another example of the navigation screen; and

FIG. 20 is a block diagram schematically showing the configuration of a contents retrieval system of a second embodiment according to the invention.

## DESCRIPTION OF PREFERRED EMBODIMENTS

Preferred embodiments of the invention will be described hereinbelow.

Configuration of Contents Retrieval System

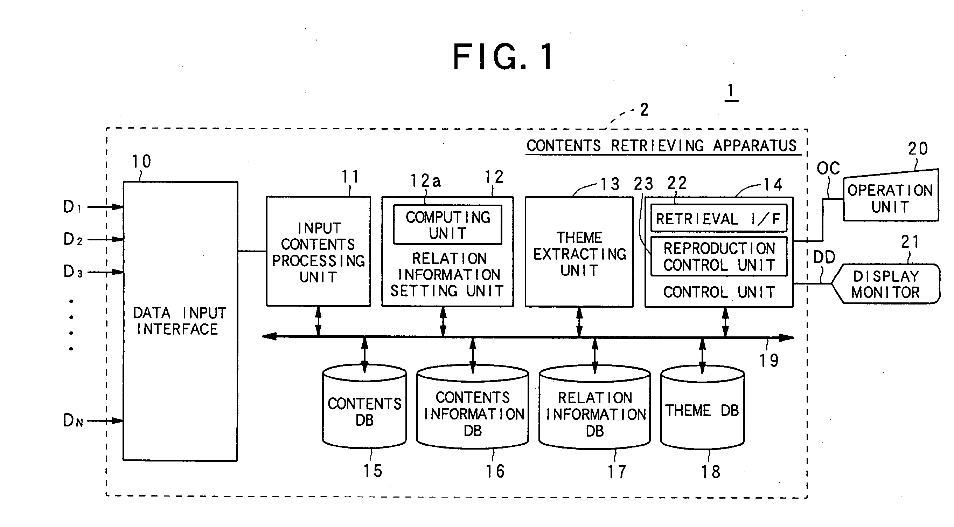

FIG. 1 is a block diagram schematically showing the configuration of a contents retrieval system as a first embodiment of the invention. A contents retrieval system 1 is constructed by a contents retrieving apparatus 2, an operation unit 20, and a display monitor 21. The contents retrieving apparatus 2 has a data input interface 10, an input contents processing unit 11, a related information setting unit 12, a theme extracting unit 13, a control unit 14, a contents database 15, a contents information database 16, a related information database 17, and a theme database 18. The processing blocks 11 to 18 except for the data input interface 10 are connected to each other via a bus 19 for transmitting control signals and data signals.

Although all of the processing blocks 11 to 14 constructing the contents retrieving apparatus 2 are constructed by hardware in the embodiment, alternately, all or a part of the processing blocks 11 to 14 may be given by a computer program executed by a microprocessor.

The data input interface 10 has the function of fetching contents data $D_1$, $D_2$, $D_3$ ... and $D_N$ input from the outside, converts the contents data into an internal signal and outputs the internal signal to the input contents processing unit 11. The data input interface 10 has an input terminal for a digital or analogue signal corresponding to standards of a plurality of kinds.

The input contents processing unit 11 temporarily stores contents data transferred from the data input interface 10 and, after that, transfers and registers the contents data to the contents database 15 via the bus 19. The input contents processing unit 11 can record data in a plurality of kinds of formats such as a sound file, a motion picture file, and a still picture file into the contents database 15.

As types of contents recorded in the contents database 15, video data, still picture, motion picture, audio data, text, and the like can be mentioned. As examples of a data supply source are a movie camera, a digital camera, a television tuner, a DVD (Digital Versatile Disk) player, a compact disc player, a mini disc player, a scanner, and a wide-area network such as the Internet. Further, as coding formats of the data, in the case of the motion picture data, an AVI (Audio Video Interleaved) format and an MPEG (Moving Picture Experts Group) format are mentioned. In the case of the still picture data, a JPEG (Joint Photographic Experts Group) format, a GIF (Graphics Interchange Format), and a bitmap arementioned. In the case of the audio data, anMP3 (MPEG-1 Audio Layer 3) format, an AC3 (Audio Code number 3) format, and an AAC (Advanced Audio Coding) data are mentioned. In the case of the text data, a language type such as Japanese, English, Germany, and French or a character code such as an ASCII (American Standard Code for Information Interchange) code, a JIS (Japan Industrial Standard) code, a shift JIS code, and Unicode are mentioned.

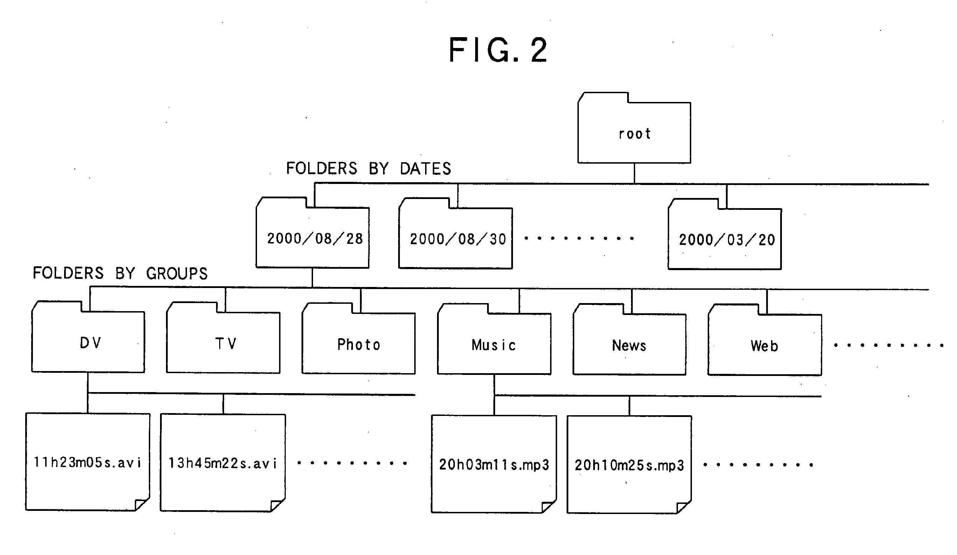

Contents recorded in the contents database 15 belong to any of a plurality of contents groups (hereinbelow, simply called groups) classified in accordance with predetermined criteria. FIG.2 is a diagram schematically showing a file system of the contents database 15. In the file system, a plurality of folders is hierarchically formed in a tree shape by using a folder in the highest root as a base point. From the root folder, folders "2000/08/28", "2000/08/30", ...,

and "2003/03/20" classified by date are provided in the first layer immediately below the root folder. In the second layer immediately lower than the folders in the first layer, folders "DV", "TV", "Photo", "Music", "News", "Web", ... which are set in groups are provided. In FIG. 2, "DV" denotes digital video data, "TV" denotes a television program, "photo" denotes a still picture, "Music" indicates audio data, "news" indicates a news program, and "Web" expresses Web data on the Internet.

Further, contents files having file names "11h23m05s.avi", "13h45m22s.avi", ..., "20h03m11s.mp3", and "20h10m25s.mp3" are stored in the third layer immediately below the folders in the second layer. In such a manner, the contents captured by the contents retrieving apparatus 2 are grouped according to the kinds of the contents, information sources, and genres. A file name "xxhyymzzs.ext" of contents is determined according to date and time of acquisition "xx"hours"yy"minutes"zz"seconds and an extension name of coding format "ext". By recording contents in such a folder configuration, target contents can be easily retrieved. The folder configuration is an example and the invention is not limited to the folder configuration.

The related information setting unit 12 has the function of obtaining attribute information of contents recorded in the contents database 15 and recording it into the contents information database 16. The attribute information includes, for example, contents ID, folder name, recording address, data length, group, coding format, recording date and time, acquisition place (latitude/longitude/altitude), various production information (title, genre, performers, keyword, comment, etc.), various media information (image size, frame rate, bit rate, sampling frequency, and the like). In addition, various feature data (such as color, shape, pattern, motion, tone, melody, music instrument, silence, and the like)) which can be used in a contents retrieving process or browsing of contents can be also recorded. Further, user's preference information such as the number of browsing times, browsing frequency, and preference level (the degree of preference of contents) can be also recorded.

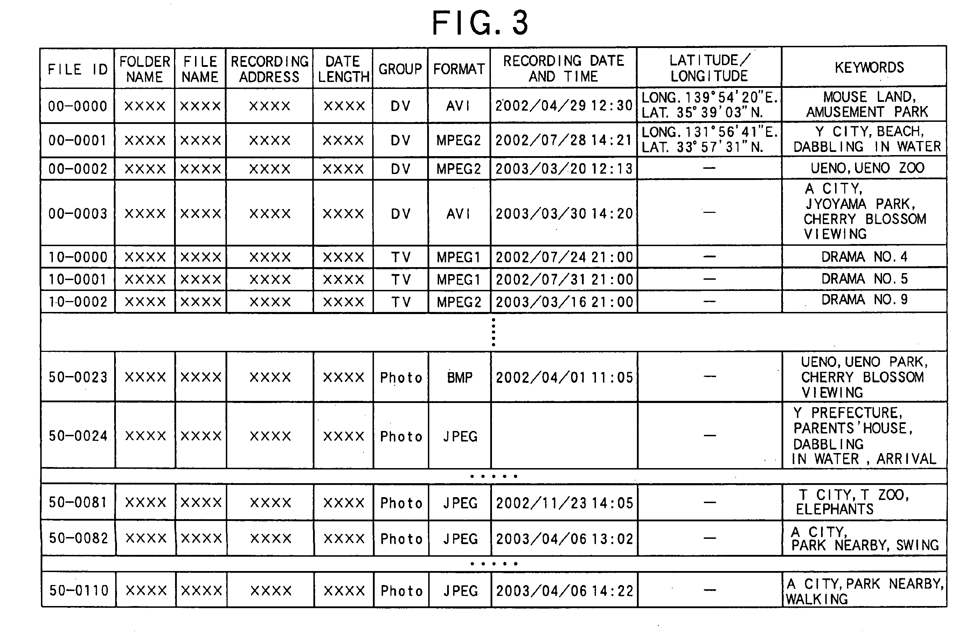

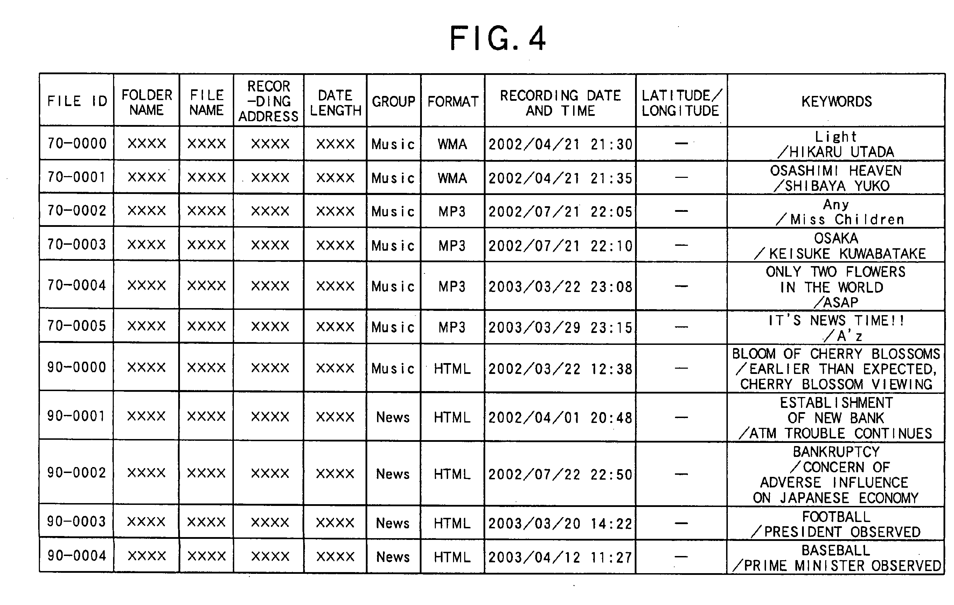

FIGS. 3 and 4 illustrate attribute information recorded in the contents information database 16. Referring to FIGS. 3 and 4, file IDs "00-0000", "00-0001", "00-0002", ..., and "90-0004" are assigned to contents. FIG. 3 shows attribute information of image-related contents, and FIG. 4 shows attribute information of audio-related contents. For the file ID of each contents, the folder name of the contents, file name, recording address, data length, group, format, recording date and time, position information (latitude and longitude), and keyword (character information) are extracted and recorded. "Folder name" indicates the name of a folder formed in the contents database 15, "file name" indicates the name of a file recorded in the contents database 15, and "recording date and time" expresses date and time when contents are recorded in the contents database 15. "Position information" is information indicative of the place where contents are generated and is obtained by GPS (Global Positioning System) or the like.

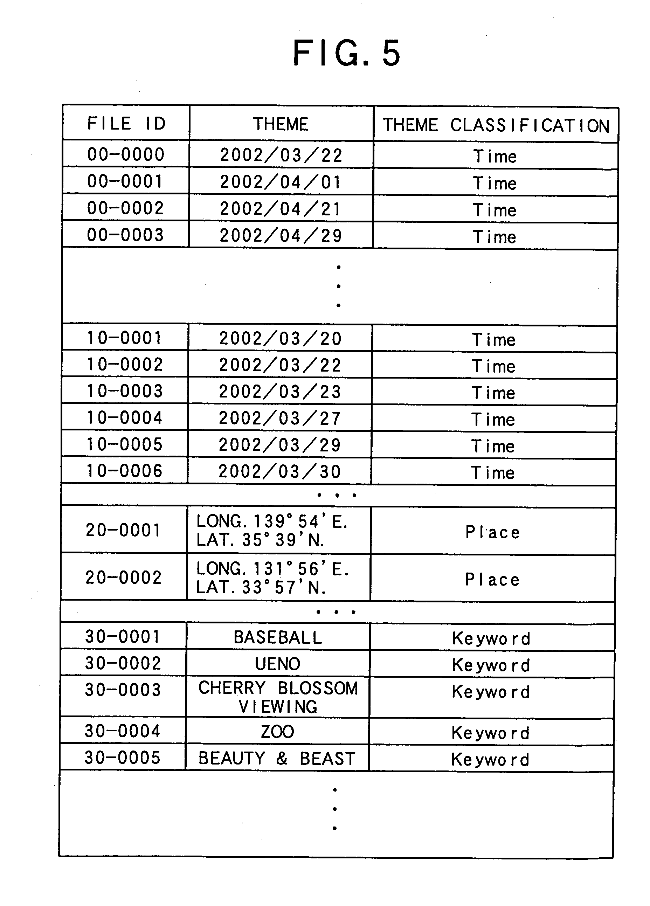

The theme extracting unit 13 has the function of extracting a theme for each predetermined classification from an attribute information group with reference to the contents information database 16. In the embodiment, themes extracted for contents are the acquisition date and time, position information, and character information (keyword), and the classification of the themes (hereinbelow, called theme classification) is "time", "place", or "keyword". The information of the classification and the theme classification are recorded in the theme database 18 in accordance with the sequence as shown in FIG. 5. Referring to FIG. 5, the theme name corresponding to the theme classification is recorded for each file ID and the theme names are sorted in accordance with the theme classification.

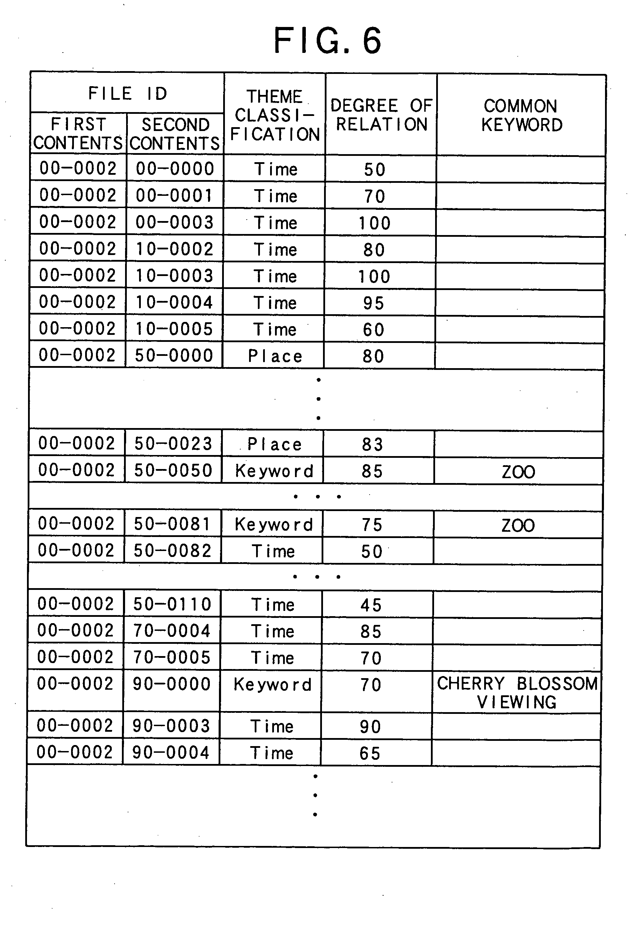

The related information setting unit 12 has a computing unit 12a for calculating the degree of relation to be recorded in the relation information database 17. The computing unit 12a has the function of calculating the degree of relation indicative of relationship among a plurality of contents by using theme classification as classification criteria. The method of calculating the degree of relation will be described later. For example, in the case where the theme classification is "time", the closer the acquisition dates and times of two contents are, the higher the degree of relation between the contents is. The farther the acquisition dates and times of two contents are, the lower the degree of relation is. The information of the degree of relation is recorded in the related information database 17 in accordance with the sequence shown in FIG. 6. Referring to FIG. 6, it is understood that the degree of relation between first contents and second contents, theme classification, and common keywords are recorded.

The control unit 14 will now be described. The control unit 14 has the functions of controlling operations and inputs/outputs of data of the other processing blocks 11 to 13 and 15 to 18, receiving and processing control data OC transmitted from the operation unit 20, and controlling a video signal DD output to the display monitor 21. The operation unit 20 is an input device used by the user to enter instruction information and can be constructed by a keyboard, a mouse, a pointing device, a touch panel, a sound recognizer, and the like.

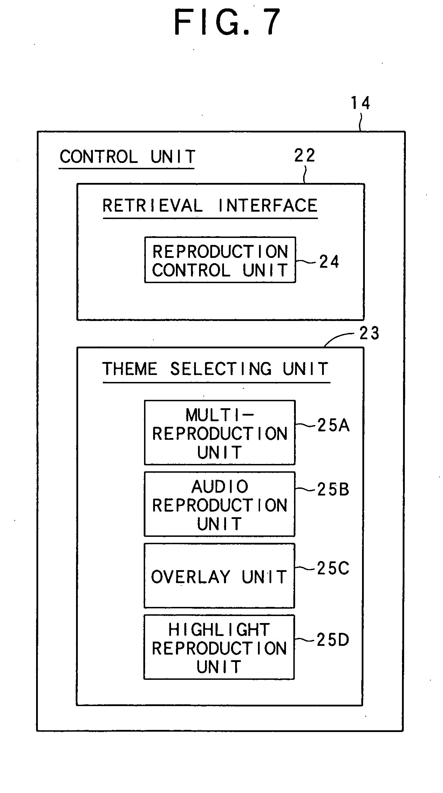

The control unit 14 also has a retrieval interface 22 for performing a contents retrieval supporting process by a dialogue with the user through the operation unit 20 and the display monitor 21, and a reproduction control unit 24. FIG. 7 is a block diagram schematically showing the configuration of the control unit 14. The retrieval interface 22 is a graphical user interface using a display, and has a theme selecting unit 23. The reproduction control unit 24 is constructed by a multi-reproduction unit 25A, an audio reproduction unit 25B, a superimpose unit 25C, and a highlight reproduction unit 25D. The retrieval interface 22 and the reproduction control unit 24 may be constructed by hardware or a computer program, which is executed by a microprocessor.

An example of the operation of the contents retrieval system 1 having the above-described configuration will be described in detail hereinbelow.

New Contents Recording Process

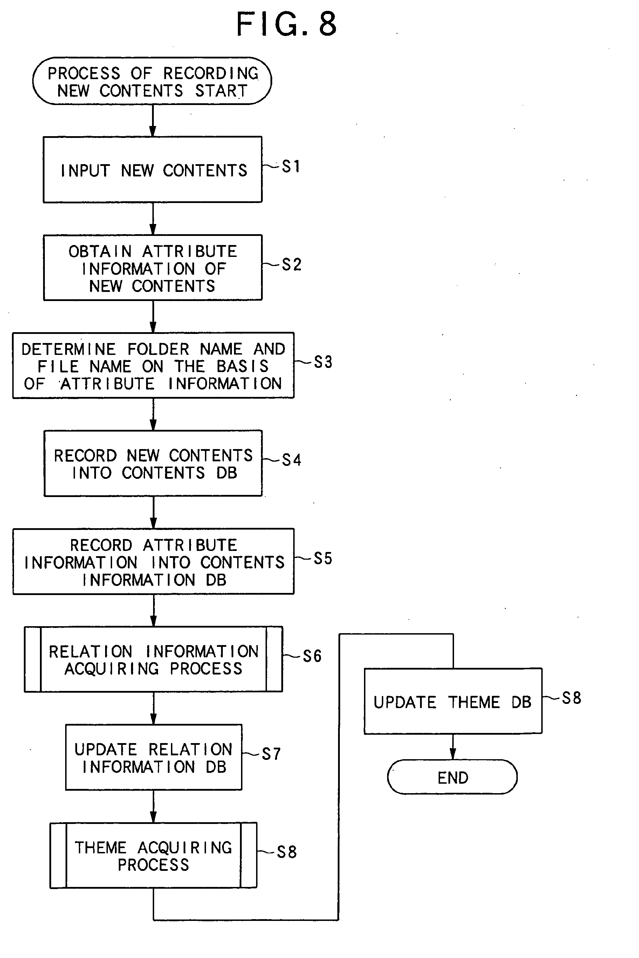

FIG. 8 is a flowchart schematically showing the procedure of a process of recording new contents. First, in step S1, new contents are input to the input contents processing unit 11 via the data input interface 10. The input contents processing unit 11 acquires attribute information added to the new contents (step S2), determines folder name and file name on the basis of the attribute information (step S3), transfers the new contents to the contents database 15 via the bus 19, and records the new contents in accordance with the file system shown in FIG. 2 (step S4).

In step S5, the related information setting unit 12 obtains the attribute information of the contents recorded in the contents database 15 and, after that, registers the attribute information in the sequence shown in FIGS. 3 and 4 into the contents information database 16.

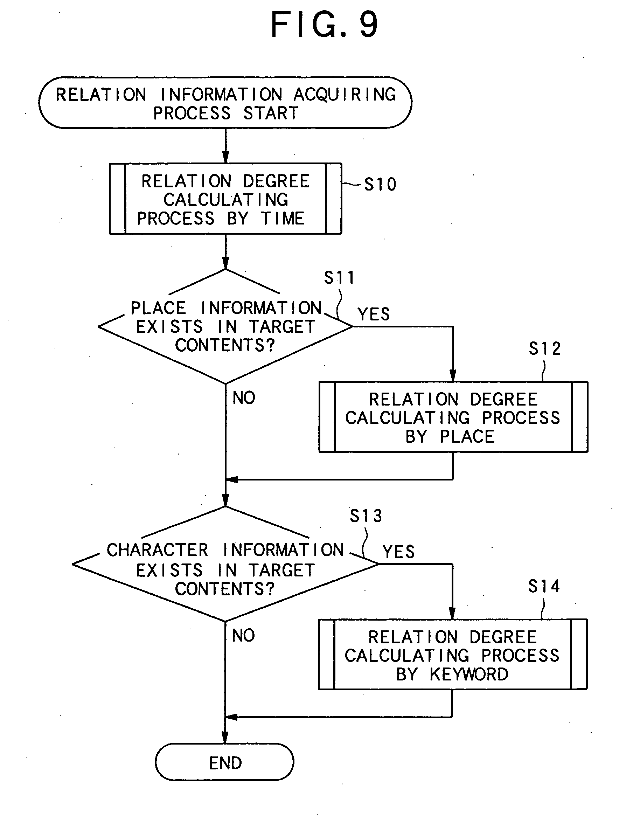

In step S6, a subroutine process is executed. Concretely, the related information setting unit 12 is started and the computing unit 12a of the related information setting unit 12 acquires related information (the degree of relation) in accordance with the procedure of a related information acquiring process (FIG.9) which will be described later. After that, the program returns to the main routine (the new contents recording process) , and shifts to step S7. In step S7, the related information setting unit 12 transfers the acquired related information to the related information database 17, records it in the sequence shown in FIG. 6, and updates the related information database 17.

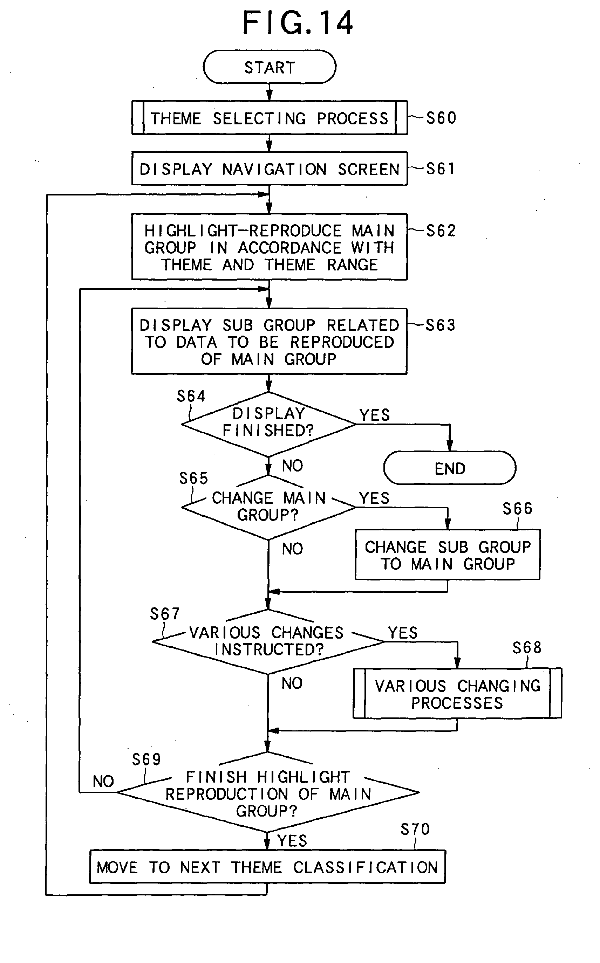

In step S8, a subroutine process is executed. Concretely, the theme extracting unit 13 is started. The theme extracting unit 13 acquires a theme in accordance with the procedure of a theme acquiring process (FIG. 14) which will be described later. After that, the program returns to the main routine and shifts to step S9. The theme extracting unit 13 transfers the acquired theme and information of the theme classification to the theme database 18 via the bus 19, and records it in the sequence shown in FIG. 5, thereby updating the theme database 18. The new contents recording process is finished.

Related Information Acquiring Process

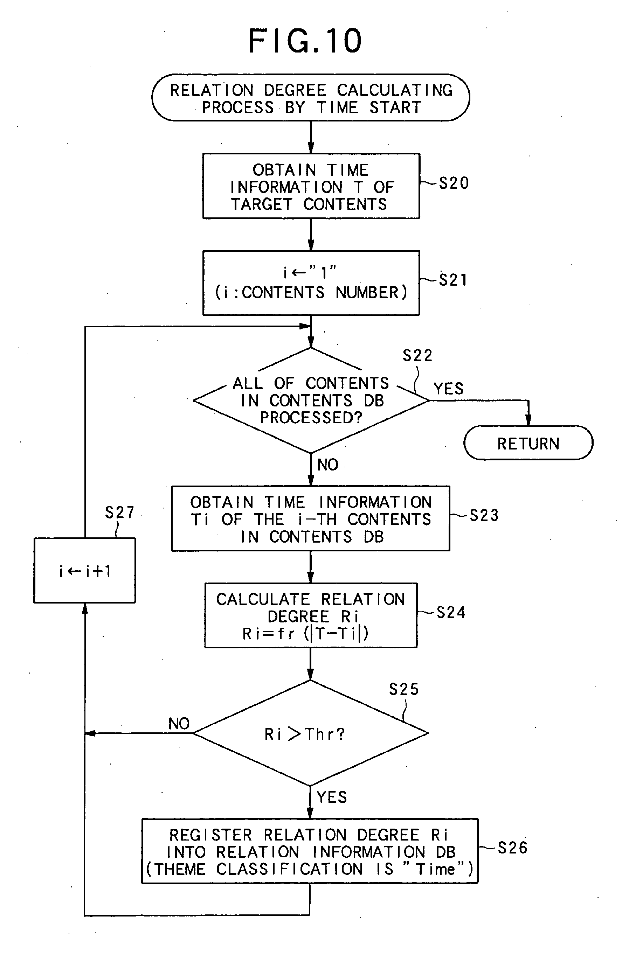

A related information acquiring process will now be described. FIG. 9 is a flowchart schematically showing the procedure of the related information acquiring process. After the related information setting unit 12 is started, the computing unit 12a first calls a subroutine of the procedure shown in FIG. 10 and executes the relation degree calculating process (step S10) when the theme classification is "time".

With reference to FIG. 10, the time information T of target contents is obtained and held in step S20. After that, the first contents is selected from N pieces (N: natural number) of contents recorded in the contents database 15 (step S21).

In step S22, it is determined whether the process has been finished or not on all of the N pieces of contents recorded in the contents database 15. When it is determined that the process is finished on all of N pieces of contents, the program returns to the main routine shown in FIG. 9. On the other hand, in the case where the process has not been finished on all of N pieces of contents, that is, in the case where the first contents is not the last N-th contents, the computing unit 12a shifts to step S23.

In step S23, time information $Ti$ of the i-th contents (i = 1) is obtained. In step S24, the relation degree $Ri$ between the i-th contents and the target contents is calculated as one of relation information. The relation degree $Ri$ by the time has a value which decreases as the differential absolute value $\delta$ (= $|T - Ti|$) between the time information T of the target contents and the time information $Ti$ of the i-th contents increases. As the differential absolute value $\delta$ decreases, the relation degree $Ri$ increases. The relation degree $Ri$ is given by the following equation (1).

$$Ri = fr(|T - Ti|) \qquad (1)$$

In the equation (1) , fr (x) denotes a function related to an input variable x. Preferably, the function $fr(x)$ forms a distribution which is the maximum when the differential absolute value $\delta$ is zero and attenuates as the differential absolute value $\delta$ increases. Concretely, the function fr (x) is given by the following equation (2) or (3).

$$fr(x) = \frac{C_0}{1 + \alpha x^n} \qquad (2)$$

$$fr(x) = C_O \exp(-\alpha x) \tag{3}$$

In the equations (2) and (3) , $\alpha$ and $C_o$ denote positive constants, and n denotes a positive integer or a positive real number.

After the relation degree Ri by time is calculated in step S24, in step S25, the magnitude relation between the relation degree Ri and a predetermined threshold Thr is determined. In the case where the relation degree Ri is larger than the threshold Thr, it is determined that the relationship between the target contents and the i-th contents is high, and the program shifts to the process in the following step S26. In step S26, the relation degree Ri between the target contents and the i-th contents is registered in the sequence shown in FIG. 6 into the relation information database 17. The program shifts to the process in step S27 to calculate the degree of relation between the i+1th contents and the target contents.

After the contents number "i" is incremented in step S27, the series of processes starting from step S22 are repeated until it is determined in step S22 that the process is finished on all of N contents. The threshold Thr can be variably set by an instruction of the user via the operation unit 20.

On the other hand, when the relation degree Ri is equal to or smaller than the threshold Thr in step S25, it is determined that the relationship between the target contents and the i-th contents is low, and the program shifts to the process in step S27 to calculate the degree of relation between the (i+1) th contents and the target contents.

When it is determined in step S22 that the process of calculating the relationship between each of all of the contents recorded on the contents database 15 and the target contents is finished in step S22, the program returns to the main routine shown in FIG. 9.

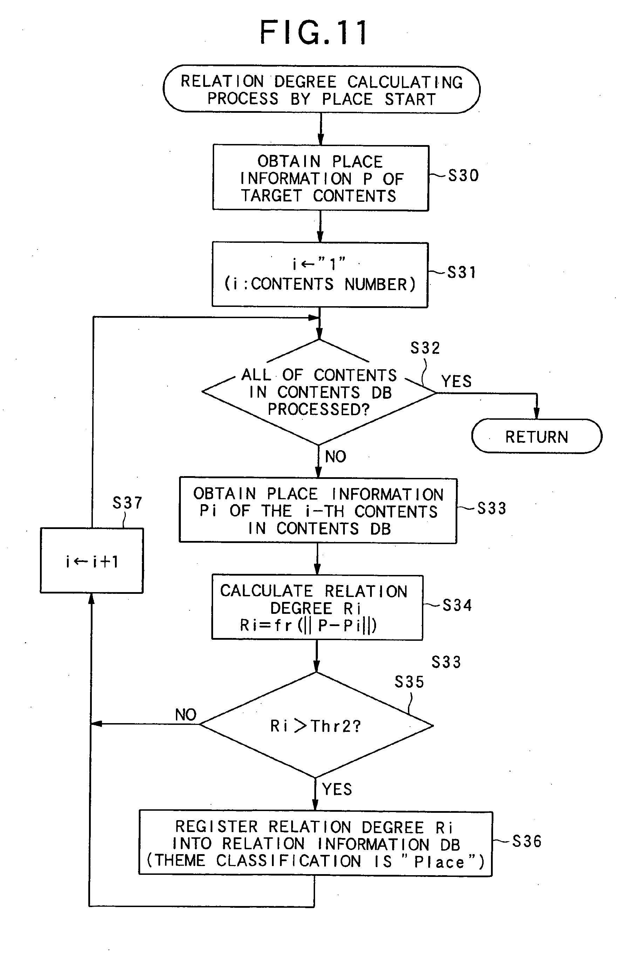

In the routine shown in FIG. 9, after a relation degree calculating process (step S10) by time is finished, in the following step S11, whether place information as attribute information of the target contents exists or not is determined. When it is determined that the place information does not exist, the program shifts to the process of following step S13. When it is determined that the place information exists, the computing unit 12a calls a subroutine of a procedure shown in FIG. 11, and executes a relation degree calculating process (step S12) for the case where the theme classification is "place".

Referring to FIG. 11, in step S30, place information P of the target contents is obtained and held. The place information P is constructed by a set of latitude and longitude of the point at which the target contents are obtained.

After that, the first contents is selected from the N contents (N: natural number) recorded in the contents database 15 (step S31). In step S32, whether the process has been finished on all of the N contents recorded in the contents database 15 or not is determined. If it is determined that the process has been finished on all of the N contents, the program returns to the main routine shown in FIG. 9. On the other hand, in the case where the process has not been finished on all of the N contents, that is, in the case where the first contents is not the last Nth contents, the computing unit 12a shifts the process to the next step S33.

In step S33, the place information $P_i$ of the i-th contents (i = 1) is obtained. In step S34, the relation degree Ri between the i-th contents and the target contents is calculated as one of relation information. The relation degree Ri by the place has a value which decreases as the difference between the place information P of the target contents and the place information Pi of the i-th contents, that is, the distance (= $\|P - Pi\|$) between the two points increases. As the distance decreases, the relation degree Ri increases. The relation degree Ri is given by the following equation (4).

$$Ri = fr(\|P - Pi\|) \tag{4}$$

In the equation (4) , fr (x) denotes a function related to an input variable x. Preferably, the function fr(x) forms a distribution which is the maximum when the distance (= $\|P - Pi\|$) is zero and attenuates as the distance increases. Concretely, as the function fr(x), it is sufficient to use the equation (2) or (3).

The distance between the two points can be calculated by the following equation (5).

$$\begin{cases} \Delta = \arccos(\cos\theta \cdot \cos\theta i \cdot \cos(\lambda - \lambda i) + \sin\theta \cdot \sin\theta i) \\ \|P - Pi\| = \Delta \cdot 6369 km \end{cases} \tag{5}$$

In the equation (5), $\lambda$ denotes the longitude of the place at which the target contents is obtained, $\lambda l$ denotes

the longitude of the place at which the i-th contents is obtained, θ denotes geocentric latitude of the place at which the target contents is obtained, and θi indicates geocentric latitude of the place at which the i-th contents is obtained. The geocentric latitudes θ and θi are calculated by using geographic latitudes φ and φi included in the place information P and Pi. Concretely, the relation between the geocentric latitudes θ and θi and the geographic latitudes φ and φi are expressed as shown by the following equation (6).

$$\begin{cases} \theta = \phi - 11.55'\sin(2\phi) \\ \theta i = \phi i - 11.55'\sin(2\phi i) \end{cases} \quad (6)$$

In the embodiment, each of the place information P and Pi is constructed by the set of latitude and longitude. Instead, the place information may be constructed by a set of latitude, longitude, and altitude as necessary.

After the relation degree Ri by place is calculated in step S34, in step S35, the relation between the relation degree Ri and a predetermined threshold Thr2 is determined. In the case where the relation degree Ri is larger than the threshold Thr2, it is determined that the relationship between the target contents and the i-th contents is high, and the program shifts to the process in the following step S36. In step S36, the relation degree Ri between the target contents and the i-th contents is registered in the sequence shown in FIG. 6 into the relation information database 17. The program shifts to the process in step S37 to calculate the degree of relation between the i+1th contents and the target contents.

After the contents number "i" is incremented in step S37, the series of processes starting from step S32 are repeated until it is determined in step S32 that the process is finished on all of N contents. The threshold Thr2 can be variably set by an instruction of the user via the operation unit 20.

On the other hand, when the relation degree Ri is equal to or smaller than the threshold Thr2 in step S35, it is determined that the relationship between the target contents and the i-th contents is low, and the program shifts to the process in step S37 to calculate the degree of relation between the (i+1) th contents and the target contents.

When it is determined in step S32 that the process of calculating the degree of relation between each of all of the contents recorded on the contents database 15 and the target contents is finished, the program returns to the main routine shown in FIG. 9.

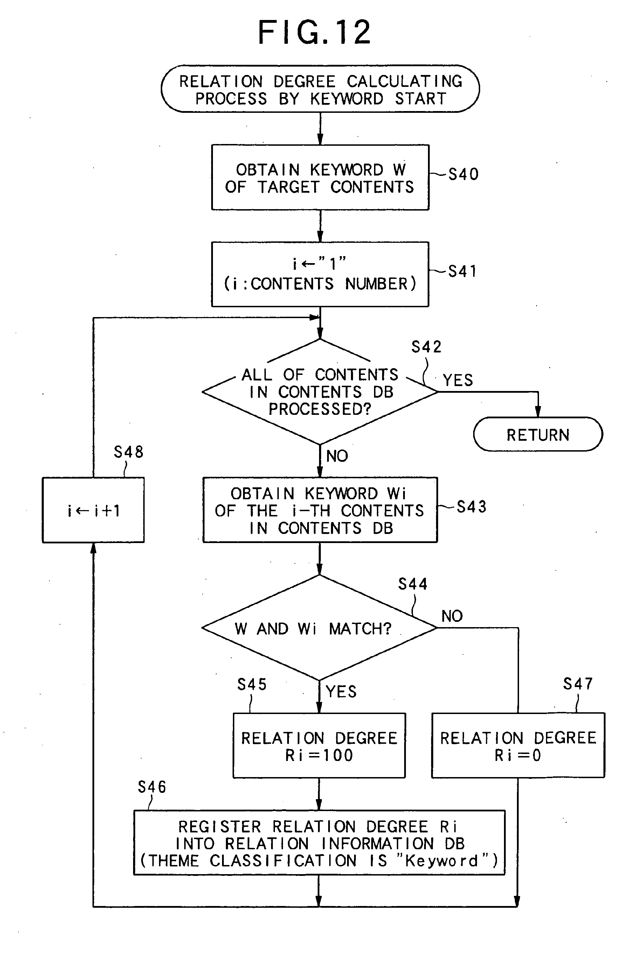

In the routine shown in FIG. 9, after a relation degree calculating process (step S12) by place is finished, in the following step S13, whether character information (keyword) as attribute information of the target contents exists or not is determined. When it is determined that the character information does not exist, the associated information acquiring process is finished. On the other hand, when it is determined that the character information exists, a subroutine of a procedure shown in FIG. 12 is called and a relation degree calculating process (step S14) for the case where the theme classification is "keyword" is executed.

Referring to FIG. 12, in step S40, a keyword W of the target contents is obtained and recorded. Next, the first contents is selected from the N contents (N: natural number) recorded in the contents database 15 (step S41).

In the following step S42, whether the process has been finished on all of the N contents recorded in the contents database 15 or not is determined. If it is determined that the process has been finished on all of the N contents, the program returns to the main routine shown in FIG. 9. On the other hand, in the case where the process has not been finished on all of the N contents, that is, in the case where the first contents is not the last Nth contents, the computing unit 12a shifts the process to the next step S43.

In step S43, a keyword Wi of the i-th contents (i = 1) is obtained. In step S44, whether a keyword W of the target contents perfectly matches the keyword Wi of the i-th contents or nor is determined. In the case where it is determined that they match perfectly, the relation degree Ri is set to 100% in step S45. In step S46, the relation degree Ri and the perfectly matched keyword (common keyword) are registered in the relation information database 17. After that, the program shifts to the process in step S48 to calculate the degree of relation between the i+1th contents and the target contents.

On the other hand, when it is determined in step S44 that the keyword W of the target contents and the keyword Wi of the i-th contents do not match perfectly, the relation degree Ri is set to 0% in step S47 . After that, the program shifts to the process in step S48 to calculate the degree of relation between the (i+1) th contents and the target contents.

The contents number "i" is incremented in step S48 and, after that, the series of processes starting from step S42 are repeated until it is determined in step S42 that the process is finished on all of the N contents.

In the case where it is determined in step S42 that the calculating process has been finished on all of the contents, the program returns to the main routine shown in FIG. 9 and the relation information acquiring process is finished.

Although the relation degree Ri by keyword is set to either 100% or 0% in the relation degree calculating process shown in FIG. 12, the invention is not limited to the setting method. For example, in another method of setting the relation degree Ri by keyword, the higher the matching rate between the keyword W of the target contents and the keyword Wi of the i-th contents is, the higher the value is set. The lower the matching rate is, the lower value is set. It is also possible to compare the calculated relation degree Ri with the predetermined threshold and, according to the result of the comparison, determine whether the relation degree Ri is registered in the relation information database 17 or not.

Further, it is also possible to preliminarily set the degree of relation corresponding to the combination of the keywords W and Wi, record the degree of relation into a reference database (not shown), and use it. For example, in the reference database, the relation degree Ri corresponding to a set of two keywords of "pasta" and "pizza" is preset to 80, and the relation degree Ri corresponding to a set of two keywords of "pasta" and "wine" can be preset to 50. The computing unit 12a can obtain the relation degree Ri corresponding to the combination of the keywords W and Wi by referring to the reference database.

Theme Extracting Process

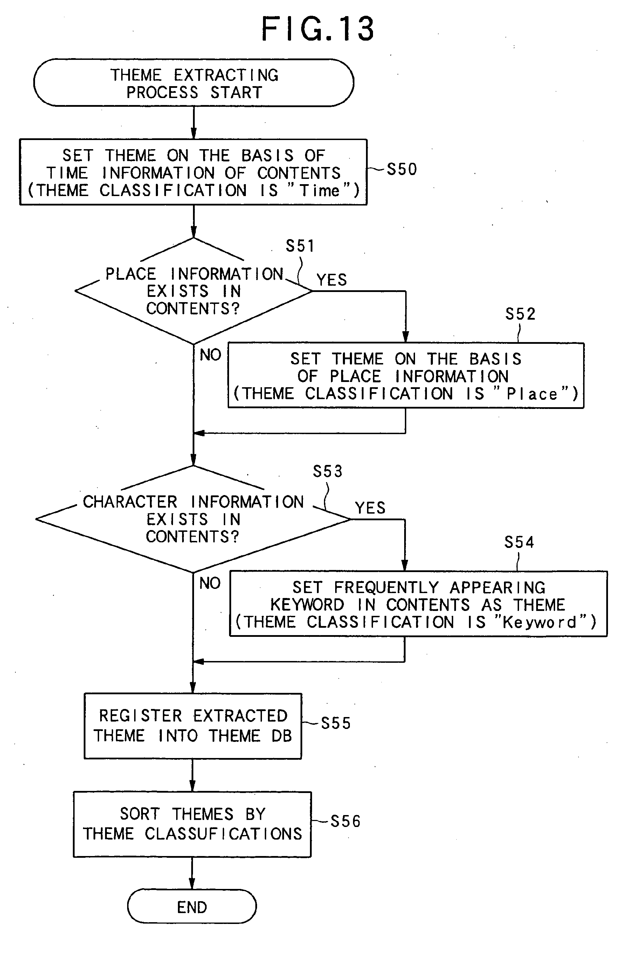

A theme extracting process by the theme extracting unit 13 will now be described. FIG. 13 is a flowchart schematically showing an example of the procedure of the theme extracting process. Referring to FIG. 13, in step S50 after the theme extracting unit 13 is activated, the theme extracting unit 13 refers to the contents information database 16, extracts time information related to the theme classification "time" from the attribute information of the contents, and sets the time information as the theme. For example, in the case where the contents attribute information indicates contents acquisition date and time of "12:13 on March 20, 2003", the theme of the contents can be set to "20/03/2003".

In the following step S51, whether place information is added to the contents or not is determined. In the case where it is determined that the place information is added, the theme extracting unit 13 extracts place information related to the theme classification "place" from the attribute information of the contents and sets it as a theme (step S52). After that, the program advances to the process in step S53. On the other hand, when it is determined in step S51 that the place information is not added, the program shifts to the process in step S53. For example, when the attribute information of the contents indicates the contents acquisition place of "latitude 35°93'10"N and longitude 139°54'20""E, the theme of the contents can be set to "latitude 35°93'N and longitude 139°54' E. In and around Tokyo, the distance corresponding to one minute in latitude is about 1.852 km, and the distance corresponding to one minute in longitude is 1.498 km. By using the distances as a scale, the range of the area of the theme as the place information can be set to be wider or narrower.

In step S53, whether the character information (keyword) is added to the contents or not is determined. When it is determined that the character information is added, the theme extracting unit 13 extracts the character information which is related to the theme classification "keyword" and frequently appears from the attribute information of the contents, and sets the character information as the theme (step S54). After that, the program shifts to the process in step S55. On the other hand, in the case where it is determined in step S53 that the character information is not added, the program shifts to the process in step S55. For example, when character information "zoo" of contents appears frequently by the number equal to or more than a predetermined number of times in the same group, the theme of the contents can be set to "zoo".

The theme extracting unit 13 registers an extracted theme in the sequence shown in FIG. 5 into the theme database 18 (step S55) and, after that, sorts the themes by theme classification (step S56). After that, the theme extracting process is finished.

Retrieval Supporting Process

A retrieval supporting process by the retrieval interface 22 (FIG. 7) will now be described. FIG. 14 is a flowchart schematically showing an example of the procedure of the retrieval supporting process (main routine).

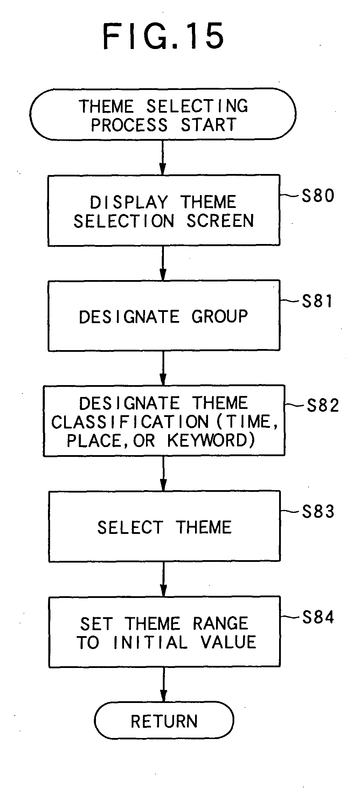

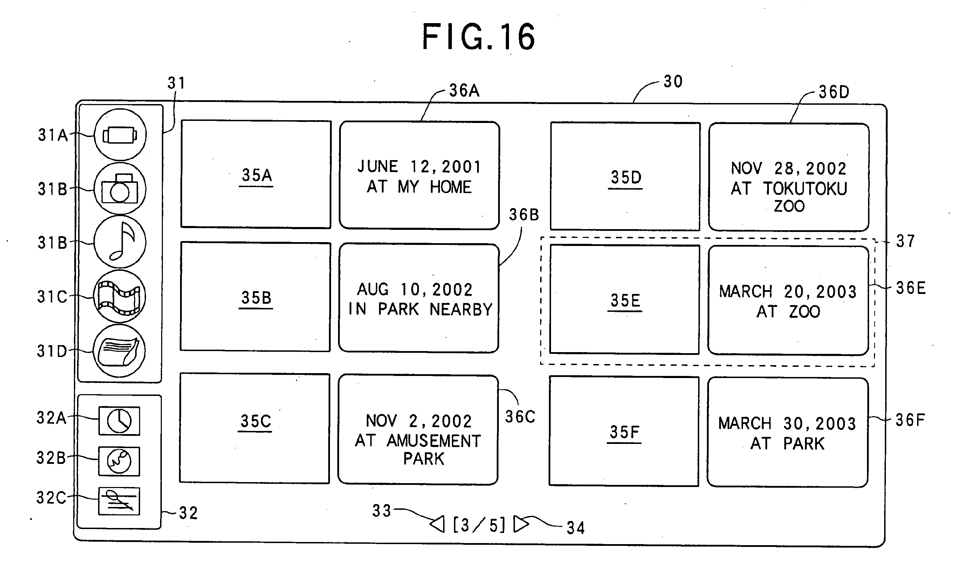

In step S60, a theme selecting process (subroutine) by the theme selecting unit 23 is executed. FIG. 15 is a flowchart schematically showing the procedure of the theme selecting process. First, the theme selecting unit 23 generates a theme selection screen 30 shown in FIG. 16 and displays it on the display monitor 21 (step S80). The theme selection screen 30 has a group selection menu 31 and a theme classification selectionmenu 32. The group selection menu 31 is constructed by a motion picture button 31A, a still picture button 31B, a music button 31C, a TV button 31D, and a news button 31E. The theme classification selection menu 32 is constructed by a time designation button 32A, a place designation button 32B, and a keyword designation button 32C.

In step S81, the user operates the operation part 20 while recognizing the theme selection screen 30 displayed on the display monitor 21, and selects a desired group by designating any of the buttons in the group selection menu 31. Further, the user operates the operation unit 20 and designates any of the buttons in the theme classification selection menu 32, thereby selecting a desired theme classification (step S82). The theme selecting part 23 refers to the contents database 15 and the theme database 18 on the basis of an instruction received from the operation unit 20, and displays a list of thumbnail images 35A to 35F indicative of a single or a plurality of contents groups belonging to the selected group onto the theme selection menu 30 in accordance with the selected theme classification. As a result, the user can recognize the selected contents group at a glance.

In the example shown in FIG. 16, the user selects the motion picture button 31A in the group selection menu 31, and the time designation button 32A in the theme classification selection menu 32. In the theme selection screen 30, together with the thumbnail images 35A to 35F, a list of titles 36A to 36F corresponding to the thumbnail images is displayed. In each of the titles 36A to 36F, the theme constructed by time information (date/month/year of image capture) corresponding to the theme classification and a comment is displayed. The thumbnail images 35A to 35F are arranged in the order of date and year of image capture.

In the case where the number of contents is large and motion picture files of a selected main group cannot be displayed in one screen, a plurality of pages of list screens as shown in FIG. 16 are generated. In the shown example, the third page out of five pages of list screens is displayed. The user can switch the list screen to the preceding page or the subsequent page by selecting a switch button 34 or 35.

In step S83, the user operates the operation unit 20 to move a selection frame 37, thereby selecting a desired theme. As a result, a contents group (main group) corresponding to the theme is selected. The theme selecting unit 23 reads single or plural contents belonging to the main group from the contents database 15. Further, in step S84, the theme selecting unit 23 sets a theme selection range (hereinbelow, called "theme range") which will be described later to a predetermined initial value and then finishes the theme selecting process. After that, the program returns to the main routine shown in FIG. 14.

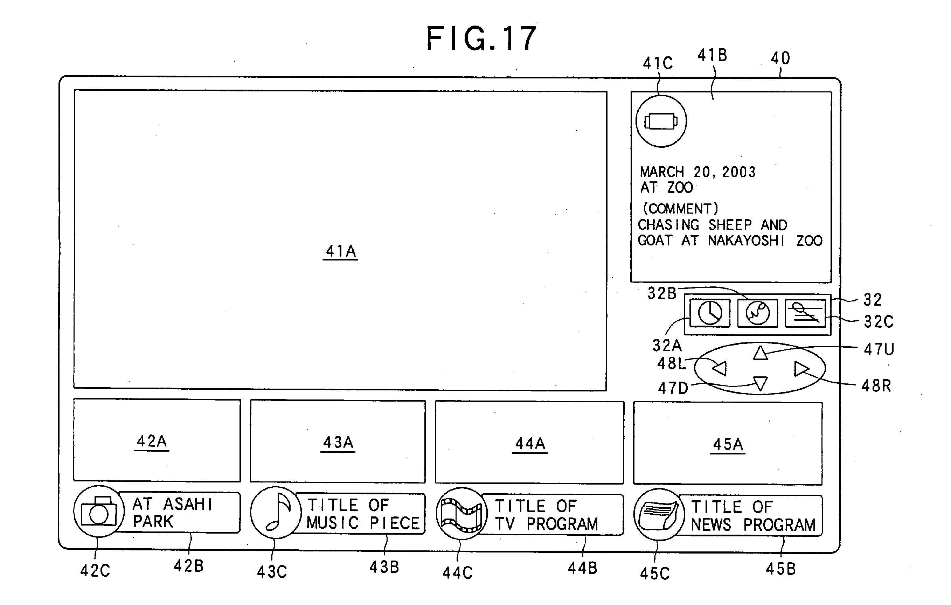

When the program returns to the main routine shown in FIG. 14, in step S61, the multi-reproduction unit 25A (FIG. 7) generates a navigation screen 40 (FIG. 17) and displays it on the display monitor 21. In a large screen region (main region) positioned almost in the center of the navigation screen 40, a motion picture 41A of the contents belonging to the main group selected in step S60 is displayed. In an upper right region 41B in the navigation screen 40, the theme name and a comment of the contents picture 41A are displayed. In a region lower than the upper right region 41B, the theme classification selection menu 32 and various selection buttons 48R, 48L, 47U, and 47D which will be described later are provided. The theme classification selection menu 32 is constructed by the time designation button 32A, place designation button 32B, and keyword designation button 32C.

In the following step S62, the highlight reproduction unit 25D (FIG. 7) starts a highlight reproducing process of reproducing main parts of a plurality of contents belonging to the main group while sequentially switching the main parts in the main region. By the process, the user can sequentially recognize only the main parts of the plurality of contents as audio video and, therefore, can grasp the outline of the plurality of contents in short time.

In step S63, the highlight reproduction unit 25D displays highlights of the contents images 41A of the main group in the navigate screen 40, simultaneously, searches the relation information database 17 for a contents group of a sub group having high relation with the contents image 41A, and displays thumbnail images 42A, 43A, 44A, and 45A of the contents group. As described above, the degree of relation among contents is recorded in the relation information database 17 (FIG. 6) . The multi-reproduction unit 25A retrieves a contents group (sub group) having the degree of relation exceeding.the theme range (threshold) with the contents image 41A, and displays the thumbnail images 42A, 43A, 44A, and 45A indicative of the contents group. As will be described later, the main group can be changed in accordance with a switching instruction of the user. The sub group is also updated in accordance with the change in the main group and the thumbnail images 42A, 43A, 44A, and 45A indicative of the sub group are also updated. Therefore, the user can grasp the outline of the contents of the sub group having a high degree of relation with the main group in a real-time manner.

As shown in FIG. 17, below the thumbnail images 42A, 43A, 44A, and 45A indicative of the sub group, icons 42C, 43C, 44C, and 45C schematically showing the types of contents belonging to the sub group and titles 42B, 43B, 44B, and 45B are displayed. In the shown example, sub groups expressed by the thumbnail images 42A, 43A, 44A, and 45A indicate a still picture, music, TV program, and news program, respectively.

The contents image 41A of the main group is displayed in a main region positioned almost in the center of the navigation screen 40, and the thumbnail images 42A to 45A indicative of contents of sub groups are displayed in a small screen region (sub region) positioned below the navigation screen 40. As described above, it is preferable to divide the display region on the screen of the display monitor 21 into a main region for displaying contents of the main group and a sub region for displaying thumbnail images of the contents of the plurality of sub groups and to set the main region to be larger than the sub regions. With the arrangement, the user can easily identify the main group and the sub groups from each other, and recognize the relationship between them at a glance.

In the case where the contents image 41A of the main group includes an accompanying audio file, the audio file can be reproduced synchronously with display of the motion picture of the contents image 41A by the audio reproduction unit 25B (FIG. 7). The audio reproduction part 25B also has the mixing function of mixing and reproducing the audio file of the main group with an audio file of the sub group when the sub group includes an audio file. When the audio file belonging to the main group will be called "main audio file" and the audio file belonging to the sub group will be called "sub audio file", it is desirable to give the following functions (1) to (6) to the audio reproduction unit 25B.

(1) When there is no main audio file, only the sub audio file is reproduced.
(2) The main audio file is reproduced at a level higher than that of the sub audio file.
(3) With respect to the main audio file, only a main sound portion which is useful for understanding the contents is selectively reproduced, the other sound portion is not reproduced and, only at the time of reproduction of the main sound portion of the main audio file, the sub audio file is reproduced.
(4) The main audio file is not reproduced but only the sub audio file is reproduced.
(5) When contents belonging to the sub group is a motion picture file of a digital videotape or a television program and includes an audio file, the audio file is not reproduced.
(6) An audio file to be reproduced is reproduced by the user. Together with the function, a button for selecting an audio file to be reproduced may be added to the navigation screen.

When the sub group includes a text file, the motion picture 41A of the main group and the text file of the sub group can be combined and overlay-displayed by the overlay unit 25C (FIG. 7). Preferably, the overlay unit 25C has an overlay function of forming a telop display region in a part of the display region of the contents of the main group and scrolling the text file in up, down, right and left in the telop display region.

It is also preferable that, when the sub group includes an image file, the overlay unit 25C, the overlay unit 25C has the overlay function of displaying an image file of the sub group in the display region of the contents of the main group like a picture-in-picture display or a picture-out-picture display.

The outline of the function of the highlight reproduction unit 25D will be described. In the embodiment, highlight reproduction is controlled in accordance with two kinds of parameters. The first parameter is a "theme", and contents related to the theme are highlight-reproduced. As described above, the theme includes time, place, keyword, and the like and is determined by the classification criteria called "theme classification". The second parameter of controlling highlight-reproduction is the "theme range" and denotes a range of selecting contents to be highlight-reproduced. As an object to be highlight-reproduced, not only a main group matching the selected theme but also a contents group having a high degree of relation with the main group concerning the theme may be also highlight-reproduced.

In the case where the contents is a motion picture file, the highlight reproduction unit 25D continuously reproduces a characteristic shot group of short time as a main part. In the case where the contents is a still picture, a group of representative pictures is used as a main part and a slide show of the group of representative pictures is executed. In the case where the contents is an audio file, a characteristic part in a music piece included in the audio file is used as a main part and continuously reproduced. When the contents is a text file, an outline part included in the text file is used as a main part and can be continuously displayed. Preferably, the highlight reproduction unit 25D has the function of selecting contents which is more preferred by the user by using a database recording the number of times of listening/watching each contents by the user, the frequency of listening/watching, and a preference level, and highlight-reproducing the selected contents.

With reference to FIG. 14, in step S64, whether the retrieval supporting process is finished or not is determined. Concretely, whether the retrieval supporting process is finished or not is determined by checking whether there is an instruction of finishing the retrieval supporting process from the user or not, or whether there is no input instruction from the user for predetermined time or not. When it is determined that the retrieval supporting process is finished, all of the processes are finished, and the program shifts to a standby state. On the other hand, when it is determined that the retrieval supporting process is not finished, the program shifts to step S65.

In step S65, whether the main group is changed or not is determined. Concretely, when the user designates any of the thumbnail images 42A to 45A of the sub groups, it is determined that the main group is changed, and the program shifts to the process in step S66. In the other cases, it is determined that the main group is not changed.

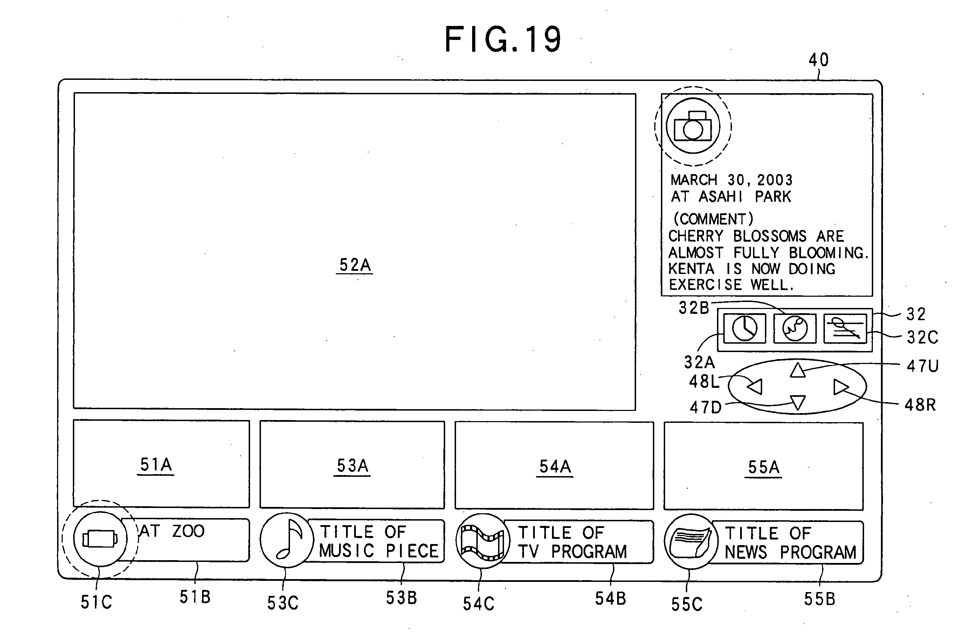

In step S66, a process of changing the sub group selected by the user to the main group is executed. In the case where the thumbnail image 42A of the still picture is selected, display contents shown in FIG. 17 are changed to display contents shown in FIG. 19. Specifically, the contents, which have belonged to the sub group, belong to the main group and are displayed in the main region in the center of the screen. Subsequently, a slide show by representative still pictures starts in the main region. Simultaneously, the motion picture which has belonged to the main group belongs to the sub group, and is displayed in the form of a thumbnail picture in a sub region in a lower part of the screen. Further, the thumbnail pictures 53A to 55A, icons 53C to 55C, and titles 53B to 55B of other sub groups are also updated. As described above, the user can easily and smoothly change to change a destination of the contents of the sub group having a strong interest to the main group. By mainly using the main group to which the contents are switched, navigation can be started.

Preferably, the retrieval interface 22 has not only the function of switching the main group in accordance with a switching instruction from the user but also the function of automatically switching the main group at random or periodically in accordance with preset conditions. By the functions, the main group can be led to a direction, which is not expected by the user. The contents unexpected but desired can be efficiently retrieved.

In step S67, whether various changing processes related to highlight reproduction are executed or not is determined. Concretely, when the user selects the selection buttons 32A to 32C and the other selection buttons 47U, 47D, 48R, and 48L in the theme classification selection menu 32, it is determined to execute the various changing processes, and the program shifts to the process in step S68. In the other cases, the program shifts to the process in step S69.

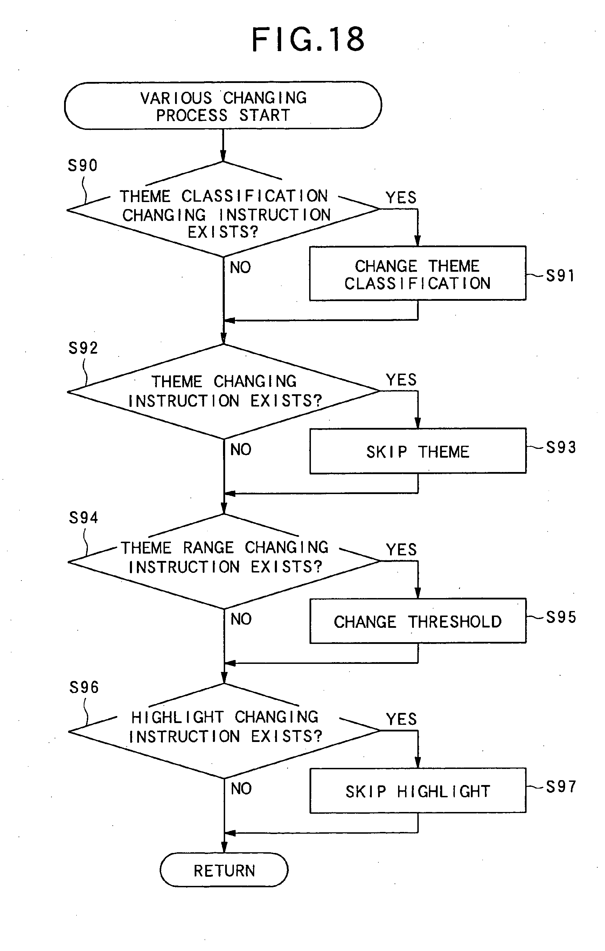

In step S68, the various changing processes (subroutine) shown in FIG. 18 are called and executed. By the subroutine, the details of the highlight reproduction can be changed. Referring to FIG. 18, in step S90, whether an instruction of changing the theme classification has been given or not is determined. Concretely, when the user selects any of the buttons in the theme classification selection menu 32, it is determined that an instruction of changing the theme classification is given, the program shifts to the process in step S91, and the theme classification changing process is executed. As necessary, the theme range is changed to an initial value. After that, the program shifts to the process in step S94. On the other hand, when it is determined that an instruction of changing the theme classification is not given in step S90, the program shifts to the determination block in step S92.

In step S92, whether a theme changing instruction (skip instruction) is given or not is determined. Concretely, when the user selects either the skip button 48R or 48L, it is determined that the skip instruction is given, and the program shifts to step S92. In step S92, highlight reproduction is set so that contents in the main group are skipped forward/rearward and reproduced on the theme unit basis in accordance with the order of registration in the theme database 18. Consequently, the user can easily skip highlight reproduction of uninterested contents, and the retrieval efficiency can be improved. For example, the theme classification is "time", highlight reproduction is set so that contents of the main group are skipped forward/rearward of acquisition date and time and are reproduced. When the theme classification is "place", highlight reproduction is set so that the contents can be reproduced while skipping the place information of the contents of the main group in the selection direction. When the theme classification is "keyword", highlight reproduction can be set so that keywords are skipped forward/rearward in order of a dictionary, and the contents are reproduced. After completion of the process in step S92, the program shifts to the process in step S94.

In step S94, whether an instruction of changing the theme range, that is, the threshold is given or not is determined. Concretely, when the user selects either the range enlarge button 47U or the range reduce button 47D, it is determined that a change in the theme range was instructed. The program advances to step S95 where the threshold is increased or decreased. By the process, the user can widen or narrow the theme range to a desired range. When the highlight reproduction is performed in a wide theme range (low threshold), contents can be recognized widely and superficially. When the highlight reproduction is performed in a narrow theme range (high threshold), the contents can be recognized narrowly and deeply. After completion of the process in step S95 or after it is determined in step S94 that there is no theme classification changing instruction, and the program shifts the process in step S96.

In step S96, whether an instruction of skipping contents to be highlight-reproduced has been given or not is determined. Concretely, when the user selects an input button in the operation unit 20 such as a right or left click button of a mouse, it is determined that the skip instruction has been given, and the program shifts to the process in step S97. In the other cases, the various changing processes are finished, and the program returns to the main routine shown in FIG. 14.

In step S97, highlight reproduction is set so that the contents of the main group are skipped forward/rearward and reproduced along the registration order in the theme database 18. Consequently, the user can easily skip highlight reproduction of uninterested contents, and retrieval efficiency can be improved. For example, the following settings can be made. When the contents is a motion picture file, a main video image can be skipped forward/rearward. When the contents is a still picture file, a representative picture is skipped. When the contents is an audio file, a characteristic part or the like of a music piece is skipped. When the contents is a text file, a theme part is skipped forward/rearward. By such settings, the user can skip an unnecessary highlight part and reach a target highlight part, that is, the main part, so that the target contents can be retrieved in shorter time. After completion of the process in step S97, the various changing processes are finished and the program returns to the main routine shown in FIG. 14.

Preferably, the retrieval interface 22 has not only the function of changing the theme, the theme range, the theme classification, or the like in response to an instruction of the user but also the function of automatically changing the theme, the theme range, the theme classification, or the like at random or periodically in accordance with preset conditions. By leading the highlight reproduction in the direction, which was not expected by the user, the user can efficiently reach the contents unexpected but desired.

In step S69 after the program returns to the main routine shown in FIG. 14, whether the present highlight reproduction is finished or not is determined. Concretely, the user can determine whether highlight reproduction is finished or not by operating the operation unit 20. When it is determined to finish the highlight reproduction, a process of switching the theme classification to the following one is executed (step S70) and the processes in step S62 and subsequent steps are repeated. On the other hand, when it is determined in step S69 that the present highlight reproduction is not finished, the processes in step S63 and subsequent steps are repeated.

In the above-described retrieval supporting process, when an audio file is included in a main group, the audio file is reproduced and information related to the audio file, such as a jacket picture of a CD, DVD, or the like, PV (Promotion Video), tile, singer, songwriter, composer, the lyrics, music note, or the like may be displayed on a screen, or a visual effect may be displayed. In such a case, the display region of the main group may be reduced and the display region of the sub group may be enlarged.

As described above, in the contents retrieval system 1 of the embodiment, the user can easily recognize the degree of relation among contents via reproduced contents. Thus, desired contents can be retrieved efficiently and easily in short time.

Other Embodiments

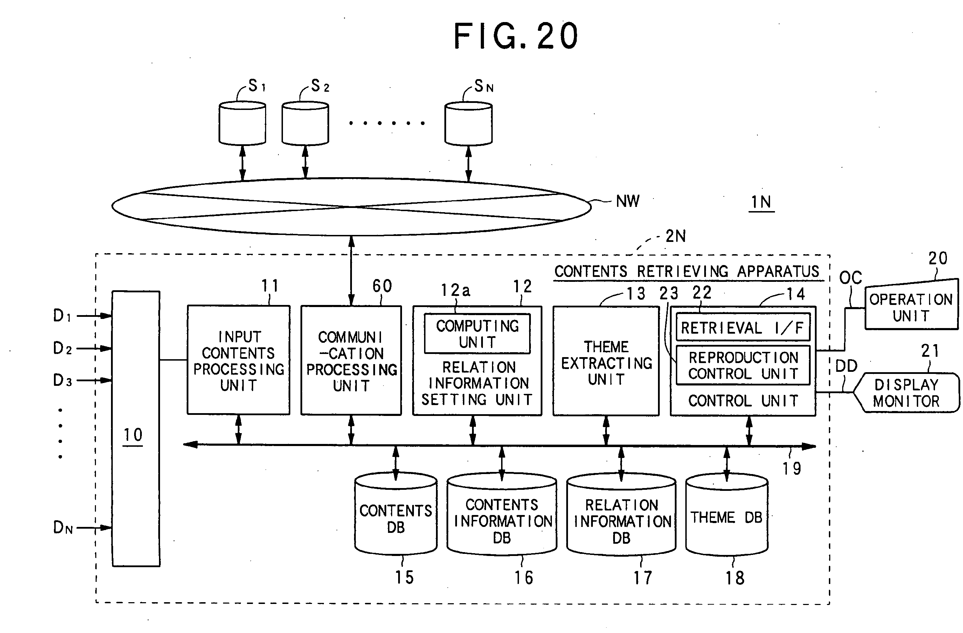

FIG. 20 is a block diagram schematically showing the configuration of a content retrieval system 1N of a second embodiment of the invention. The contents retrieval system 1N of the embodiment is characterized in that a contents retrieving apparatus 2N has a communication processing unit 60 for transmitting/receiving data to/from external storages S1, S2, ..., and Sn connected to a communication network NW such as the Internet via the communication network NW. The configuration and operation except for the communication processing unit 60 are almost the same as those of the contents retrieval system 1 mentioned above.

In the second embodiment, contents can be transferred so as to be distributed and recorded to the storages S1, S2, ..., and Sn of large capacity via the communication network NW and receive the contents stored in the storages S1, S2, ..., and Sn via the communication network NW.

It should be understood that various alternatives to the embodiments of the invention described herein may be employed in practicing the invention. Thus, it is intended that the following claims define the scope of the invention and that methods and structures within the scope of these claims and their equivalents be covered thereby.

**Claims**

1. A contents retrieval system **characterized in that** it comprises:

    a contents database (15) constructed by a plurality of contents groups classified in accordance with classification criteria;
    a relation information setting unit (12) which sets relation information indicative of relation among contents included in said plurality of contents groups;
    a relation information database (17) constructed by said relation information; and
    a control unit (14) which selects a plurality of contents having a high degree of relation with each other from said plurality of contents in said contents database (15) on the basis of said relation information in said relation information database (17), and reproducing said plurality of contents selected.

2. The contents retrieval system according to claim 1, wherein said classification criteria are set on the basis of attribute information of said contents.

3. The contents retrieval system according to claim 2, wherein time information is added as said attribute information to said contents and
    said relation information setting unit (12) has a computing unit for computing, as said relation information, the degree of relation which decreases as the difference of said time information between said contents increases, and which increases as the difference of said time information decreases.

4. The contents retrieval system according to claim 2, wherein place information is added as said attribute information to said contents and
    said relation information setting unit (12) further has a computing unit which computes, as said relation information, the degree of relation which decreases as the distance of said place information between said contents increases, and which increases as the distance of said place information decreases.

5. The contents retrieval system according to claim 2, wherein character information is added as said attribute information to said contents and

said relation information setting unit (12) further has a computing unit which computes, as said relation information, the degree of relation which increases as a matching rate of said character information between said contents increases, and which decreases as the matching rate of said character information decreases.

6. The contents retrieval system according to claim 1, further comprising a retrieval interface (22) which performs a contents retrieval supporting process in an interactive manner with the user,
wherein said contents group is constructed by a main group designated as a retrieval range and a sub group having a high degree of relation with the contents, and
the contents retrieval system further comprises a multi-reproduction unit which reproduces said contents belonging to said main group and said contents belonging to said sub group.

7. The contents retrieval system according to claim 6, further comprising:

a theme extracting unit (13) which extractes a theme for each of said contents from attribute information of said contents; and
a theme database (18) constructed by said themes extracted by said theme extracting unit,

wherein said retrieval interface (22) further has a theme selecting unit which determines said main group on the basis of said theme with reference to said theme database (18).

8. The contents retrieval system according to claim 6, further comprising:

a theme extracting unit (13) which extracts a theme for each of said contents from attribute information of said contents and classifying said themes by the meanings; and
a theme database (18) constructed by information of the meanings of said themes,

wherein said retrieval interface (22) further has a theme selecting unit which determines said main group on the basis of the meaning of said theme with reference to said theme database (18).

9. The contents retrieval system according to claim 8, wherein the meaning of said theme is consisted of at least one selected from place, time and keyword.

10. The contents retrieval system according to claim 6, wherein said multi-reproduction unit compares said relation information with a threshold and, on the basis of a result of the comparison, selects contents belonging to said sub group.

11. The contents retrieval system according to claim 10, further comprising an operation unit in which said threshold is set.

12. The contents retrieval system according to claim 6, wherein said multi-reproduction unit displays contents belonging to said main group and contents belonging to said sub group onto a display.

13. The contents retrieval system according to claim 12, wherein said multi-reproduction unit divides a display region on a screen of said display into a main region which displays contents of said main group and a sub region which displays contents of said plurality of sub groups, and said main region is set to be wider than said sub region.

14. The contents retrieval system according to claim 6, further comprising an audio reproduction unit which reproduces an audio file in said contents database (15) synchronously with display of a picture of said contents.

15. The contents retrieval system according to claim 14, wherein said audio reproduction unit mixes an audio file belonging to said main group and an audio file belonging to said sub group and reproduces the audio files.

16. The contents retrieval system according to claim 6, further comprising an overlay unit which synthesizes and displays a text file and an image file in said contents database (15).

17. The contents retrieval system according to claim 16, wherein said overlay unit synthesizes and displays said picture file belonging to said main group and said text file belonging to said sub group.

**18.** The contents retrieval system according to claim 6, further comprising an operation unit to which a switching instruction is input,
wherein said control unit (14) switches said main group in accordance with said switching instruction.

**19.** The contents retrieval system according to claim 6, wherein said control unit (14) switches said main group at random in accordance with predetermined conditions.

**20.** The contents retrieval system according to claim 18, wherein said control unit (14) switches said main group to said sub group which is currently displayed in accordance with said switching instruction.

**21.** The contents retrieval system according to claim 7, further comprising a highlight reproduction unit which sequentially switches and reproduces main parts of a plurality of contents belonging to said main group.

**22.** The contents retrieval system according to claim 21, wherein said highlight reproduction unit updates contents belonging to said sub group in accordance with switching of main parts of a plurality of contents belonging to said main group.

**23.** The contents retrieval system according to claim 21, wherein said highlight reproduction unit sequentially switches and reproduces main parts of said plurality of contents in accordance with said theme with reference to said theme database.

**24.** The contents retrieval system according to claim 23, wherein said highlight reproduction unit sequentially switches and reproduces main parts of said contents while limiting a selection range of said theme.

**25.** The contents retrieval system according to claim 24, further comprising an operation unit in which a selection range of said theme is set.

**26.** The contents retrieval system according to claim 21, further comprising an operation unit to which a skip instruction is input,
wherein said highlight reproduction unit performs reproduction while skipping contents belonging to said main group in accordance with said skip instruction.

**27.** The contents retrieval system according to claim 21, wherein said highlight reproduction unit performs reproduction while skipping contents belonging to said main group in accordance with predetermined conditions.

**28.** The contents retrieval system according to claim 1, further comprising a data input interface (10) which receives a plurality of contents input from the outside.

**29.** The contents retrieval system according to claim 1, further comprising a communication processing unit which transmits/receives data to/from an external storage, which is connected to a communication network, via the communication network.

# FIG. 1

CONTENTS RETRIEVING APPARATUS

- 10 DATA INPUT INTERFACE
- 11 INPUT CONTENTS PROCESSING UNIT
- 12a COMPUTING UNIT
- 12 RELATION INFORMATION SETTING UNIT
- 13 THEME EXTRACTING UNIT
- 22 RETRIEVAL I/F
- 23 REPRODUCTION CONTROL UNIT
- 14 CONTROL UNIT
- 15 CONTENTS DB
- 16 CONTENTS INFORMATION DB
- 17 RELATION INFORMATION DB
- 18 THEME DB
- 19
- 20 OPERATION UNIT
- 21 DISPLAY MONITOR

$D_1$, $D_2$, $D_3$ ... $D_N$

OC, DD

EP 1 508 863 A2

FIG. 2

FOLDERS BY DATES

root

2000/03/20

2000/08/30

2000/08/28

FOLDERS BY GROUPS

Web

News

Music

Photo

TV

DV

20h10m25s.mp3

20h03m11s.mp3

13h45m22s.avi

11h23m05s.avi

16

# FIG. 3

| FILE ID | FOLDER NAME | FILE NAME | RECORDING ADDRESS | DATE LENGTH | GROUP | FORMAT | RECORDING DATE AND TIME | LATITUDE/ LONGITUDE | KEYWORDS |
|---|---|---|---|---|---|---|---|---|---|
| 00-0000 | XXXX | XXXX | XXXX | XXXX | DV | AVI | 2002/04/29 12:30 | LONG. 139°54'20"E. LAT. 35°39'03"N. | MOUSE LAND, AMUSEMENT PARK |
| 00-0001 | XXXX | XXXX | XXXX | XXXX | DV | MPEG2 | 2002/07/28 14:21 | LONG. 131°56'41"E. LAT. 33°57'31"N. | Y CITY, BEACH, DABBLING IN WATER |
| 00-0002 | XXXX | XXXX | XXXX | XXXX | DV | MPEG2 | 2003/03/20 12:13 | — | UENO, UENO ZOO |
| 00-0003 | XXXX | XXXX | XXXX | XXXX | DV | AVI | 2003/03/30 14:20 | — | A CITY, JYOYAMA PARK, CHERRY BLOSSOM VIEWING |
| 10-0000 | XXXX | XXXX | XXXX | XXXX | TV | MPEG1 | 2002/07/24 21:00 | — | DRAMA NO. 4 |
| 10-0001 | XXXX | XXXX | XXXX | XXXX | TV | MPEG1 | 2002/07/31 21:00 | — | DRAMA NO. 5 |
| 10-0002 | XXXX | XXXX | XXXX | XXXX | TV | MPEG2 | 2003/03/16 21:00 | — | DRAMA NO. 9 |
| ⋮ | | | | | | | | | |
| 50-0023 | XXXX | XXXX | XXXX | XXXX | Photo | BMP | 2002/04/01 11:05 | — | UENO, UENO PARK, CHERRY BLOSSOM VIEWING |
| 50-0024 | XXXX | XXXX | XXXX | XXXX | Photo | JPEG | | — | Y PREFECTURE, PARENTS'HOUSE, DABBLING IN WATER , ARRIVAL |
| ⋯⋯ | | | | | | | | | |
| 50-0081 | XXXX | XXXX | XXXX | XXXX | Photo | JPEG | 2002/11/23 14:05 | — | T CITY, T ZOO, ELEPHANTS |
| 50-0082 | XXXX | XXXX | XXXX | XXXX | Photo | JPEG | 2003/04/06 13:02 | — | A CITY, PARK NEARBY, SWING |
| ⋯⋯ | | | | | | | | | |
| 50-0110 | XXXX | XXXX | XXXX | XXXX | Photo | JPEG | 2003/04/06 14:22 | — | A CITY, PARK NEARBY, WALKING |

EP 1 508 863 A2

# FIG. 4

| FILE ID | FOLDER NAME | FILE NAME | RECOR-DING ADDRESS | DATE LENGTH | GROUP | FORMAT | RECORDING DATE AND TIME | LATITUDE/LONGITUDE | KEYWORDS |
|---|---|---|---|---|---|---|---|---|---|
| 70-0000 | XXXX | XXXX | XXXX | XXXX | Music | WMA | 2002/04/21 21:30 | — | Light /HIKARU UTADA |
| 70-0001 | XXXX | XXXX | XXXX | XXXX | Music | WMA | 2002/04/21 21:35 | — | OSASHIMI HEAVEN /SHIBAYA YUKO |
| 70-0002 | XXXX | XXXX | XXXX | XXXX | Music | MP3 | 2002/07/21 22:05 | — | Any /Miss Children |
| 70-0003 | XXXX | XXXX | XXXX | XXXX | Music | MP3 | 2002/07/21 22:10 | — | OSAKA / KEISUKE KUWABATAKE |
| 70-0004 | XXXX | XXXX | XXXX | XXXX | Music | MP3 | 2003/03/22 23:08 | — | ONLY TWO FLOWERS IN THE WORLD /ASAP |
| 70-0005 | XXXX | XXXX | XXXX | XXXX | Music | MP3 | 2003/03/29 23:15 | — | IT'S NEWS TIME!! /A'z |
| 90-0000 | XXXX | XXXX | XXXX | XXXX | Music | HTML | 2002/03/22 12:38 | — | BLOOM OF CHERRY BLOSSOMS /EARLIER THAN EXPECTED, CHERRY BLOSSOM VIEWING |
| 90-0001 | XXXX | XXXX | XXXX | XXXX | News | HTML | 2002/04/01 20:48 | — | ESTABLISHMENT OF NEW BANK /ATM TROUBLE CONTINUES |
| 90-0002 | XXXX | XXXX | XXXX | XXXX | News | HTML | 2002/07/22 22:50 | — | BANKRUPTCY /CONCERN OF ADVERSE INFLUENCE ON JAPANESE ECONOMY |
| 90-0003 | XXXX | XXXX | XXXX | XXXX | News | HTML | 2003/03/20 14:22 | — | FOOTBALL /PRESIDENT OBSERVED |
| 90-0004 | XXXX | XXXX | XXXX | XXXX | News | HTML | 2003/04/12 11:27 | — | BASEBALL /PRIME MINISTER OBSERVED |

EP 1 508 863 A2

# FIG. 5

| FILE ID | THEME | THEME CLASSIFICATION |
|---|---|---|
| 00-0000 | 2002/03/22 | Time |
| 00-0001 | 2002/04/01 | Time |
| 00-0002 | 2002/04/21 | Time |
| 00-0003 | 2002/04/29 | Time |
| | ⋮ | |
| 10-0001 | 2002/03/20 | Time |
| 10-0002 | 2002/03/22 | Time |
| 10-0003 | 2002/03/23 | Time |
| 10-0004 | 2002/03/27 | Time |
| 10-0005 | 2002/03/29 | Time |
| 10-0006 | 2002/03/30 | Time |
| | • • • | |
| 20-0001 | LONG. 139° 54' E.<br>LAT. 35° 39' N. | Place |
| 20-0002 | LONG. 131° 56' E.<br>LAT. 33° 57' N. | Place |
| | • • • | |
| 30-0001 | BASEBALL | Keyword |
| 30-0002 | UENO | Keyword |
| 30-0003 | CHERRY BLOSSOM<br>VIEWING | Keyword |
| 30-0004 | ZOO | Keyword |
| 30-0005 | BEAUTY & BEAST | Keyword |
| | ⋮ | |

# FIG. 6

| FILE ID | | THEME CLASSI-FICATION | DEGREE OF RELATION | COMMON KEYWORD |
|---|---|---|---|---|
| FIRST CONTENTS | SECOND CONTENTS | | | |
| 00-0002 | 00-0000 | Time | 50 | |
| 00-0002 | 00-0001 | Time | 70 | |
| 00-0002 | 00-0003 | Time | 100 | |
| 00-0002 | 10-0002 | Time | 80 | |
| 00-0002 | 10-0003 | Time | 100 | |
| 00-0002 | 10-0004 | Time | 95 | |
| 00-0002 | 10-0005 | Time | 60 | |
| 00-0002 | 50-0000 | Place | 80 | |
| · · · | | | | |
| 00-0002 | 50-0023 | Place | 83 | |
| 00-0002 | 50-0050 | Keyword | 85 | ZOO |
| · · · | | | | |
| 00-0002 | 50-0081 | Keyword | 75 | ZOO |
| 00-0002 | 50-0082 | Time | 50 | |
| · · · | | | | |
| 00-0002 | 50-0110 | Time | 45 | |
| 00-0002 | 70-0004 | Time | 85 | |
| 00-0002 | 70-0005 | Time | 70 | |
| 00-0002 | 90-0000 | Keyword | 70 | CHERRY BLOSSOM VIEWING |
| 00-0002 | 90-0003 | Time | 90 | |
| 00-0002 | 90-0004 | Time | 65 | |
| · · · | | | | |

20

# FIG. 7

14

CONTROL UNIT 22

RETRIEVAL INTERFACE

REPRODUCTION CONTROL UNIT ～24

23

THEME SELECTING UNIT

MULTI-REPRODUCTION UNIT ～25A

AUDIO REPRODUCTION UNIT ～25B

OVERLAY UNIT ～25C

HIGHLIGHT REPRODUCTION UNIT ～25D

# FIG. 8

PROCESS OF RECORDING
NEW CONTENTS START

INPUT NEW CONTENTS — S1

OBTAIN ATTRIBUTE
INFORMATION OF — S2
NEW CONTENTS

DETERMINE FOLDER NAME AND
FILE NAME ON THE BASIS — S3
OF ATTRIBUTE INFORMATION

RECORD NEW CONTENTS — S4
INTO CONTENTS DB

RECORD ATTRIBUTE
INFORMATION INTO CONTENTS — S5
INFORMATION DB

RELATION INFORMATION
ACQUIRING PROCESS — S6

UPDATE RELATION — S7
INFORMATION DB

THEME ACQUIRING — S8
PROCESS

UPDATE THEME DB — S8

END

# FIG. 9

```
┌─────────────────────────────────────┐
│  RELATION INFORMATION ACQUIRING      │
│       PROCESS START                  │
└─────────────────────────────────────┘
                  │
                  ▼
        ┌─────────────────────┐
        │  RELATION DEGREE    │──── S10
        │    CALCULATING      │
        │  PROCESS BY TIME    │
        └─────────────────────┘
                  │
                  ▼
            ╱─────────────╲  S11
          ╱ PLACE INFORMATION ╲   YES
         ⟨  EXISTS IN TARGET   ⟩──────────►┌─────────────────────┐
          ╲   CONTENTS?      ╱              │  RELATION DEGREE    │── S12
            ╲─────────────╱                 │ CALCULATING PROCESS │
                  │ NO                       │      BY PLACE       │
                  │                          └─────────────────────┘
                  │◄─────────────────────────────────┘
                  ▼
            ╱─────────────╲  S13
          ╱ CHARACTER INFORMATION ╲  YES
         ⟨  EXISTS IN TARGET     ⟩─────────►┌─────────────────────┐
          ╲   CONTENTS?        ╱            │  RELATION DEGREE    │── S14
            ╲─────────────╱                 │ CALCULATING PROCESS │
                  │ NO                       │     BY KEYWORD      │
                  │                          └─────────────────────┘
                  │◄─────────────────────────────────┘
                  ▼
            ┌─────────┐
            │   END   │
            └─────────┘
```

# FIG.10

RELATION DEGREE CALCULATING
PROCESS BY TIME START

OBTAIN TIME
INFORMATION T OF ──S20
TARGET CONTENTS

$i \leftarrow "1"$
(i:CONTENTS NUMBER) ──S21

S22
ALL OF CONTENTS
IN CONTENTS DB ─── YES
PROCESSED?

RETURN

NO

OBTAIN TIME INFORMATION
Ti OF THE i-TH CONTENTS ──S23
IN CONTENTS DB

S27

$i \leftarrow i+1$

CALCULATE RELATION
DEGREE Ri ──S24
$Ri = fr(|T-Ti|)$

S25
NO ←──── $Ri > Thr?$

YES

REGISTER RELATION DEGREE Ri
INTO RELATION INFORMATION DB ──S26
(THEME CLASSIFICATION IS "Time")

24

# FIG.11

RELATION DEGREE CALCULATING
PROCESS BY PLACE START

OBTAIN PLACE
INFORMATION P OF
TARGET CONTENTS — S30

$i \leftarrow "1"$
($i$ : CONTENTS NUMBER) — S31

ALL OF CONTENTS
IN CONTENTS DB
PROCESSED? — S32

YES → RETURN

NO

OBTAIN PLACE INFORMATION
$Pi$ OF THE $i$-TH CONTENTS
IN CONTENTS DB — S33

CALCULATE RELATION
DEGREE $Ri$
$Ri = fr(\|P - Pi\|)$ — S34

$Ri > Thr2?$ — S35 S33

NO

$i \leftarrow i+1$ — S37

YES

REGISTER RELATION DEGREE $Ri$
INTO RELATION INFORMATION DB
(THEME CLASSIFICATION IS "Place") — S36

# FIG.12

RELATION DEGREE CALCULATING
PROCESS BY KEYWORD START

OBTAIN KEYWORD W
OF TARGET CONTENTS — S40

$i \leftarrow "1"$
(i:CONTENTS NUMBER) — S41

S42

ALL OF CONTENTS
IN CONTENTS DB
PROCESSED?

YES → RETURN

NO

S48

$i \leftarrow i+1$

OBTAIN KEYWORD Wi
OF THE i-TH CONTENTS
IN CONTENTS DB — S43

S44

W AND Wi MATCH?

NO

YES

S45

RELATION DEGREE
Ri=100

S47

RELATION DEGREE
Ri=0

S46

REGISTER RELATION DEGREE Ri
INTO RELATION INFORMATION DB
(THEME CLASSIFICATION IS "Keyword")

# FIG.13

THEME EXTRACTING
PROCESS START

SET THEME ON THE BASIS OF
TIME INFORMATION OF CONTENTS ─ S50
(THEME CLASSIFICATION IS "Time")

PLACE INFORMATION S51
EXISTS IN ──── YES
CONTENTS?

NO

SET THEME ON THE BASIS S52
OF PLACE INFORMATION
(THEME CLASSIFICATION IS "Place")

CHARACTER INFORMATION S53
EXISTS IN ──── YES
CONTENTS?

NO

SET FREQUENTLY APPEARING S54
KEYWORD IN CONTENTS AS THEME
(THEME CLASSIFICATION IS "Keyword")

REGISTER EXTRACTED
THEME INTO THEME DB ── S55

SORT THEMES BY
THEME CLASSUFICATIONS ── S56

END

# FIG.14

START

THEME SELECTING PROCESS —S60

DISPLAY NAVIGATION SCREEN —S61

HIGHLIGHT-REPRODUCE MAIN GROUP IN ACCORDANCE WITH THEME AND THEME RANGE —S62

DISPLAY SUB GROUP RELATED TO DATA TO BE REPRODUCED OF MAIN GROUP —S63

S64 DISPLAY FINISHED? — YES → END

NO

S65 CHANGE MAIN GROUP? — YES → CHANGE SUB GROUP TO MAIN GROUP S66

NO

S67 VARIOUS CHANGES INSTRUCTED? — YES → VARIOUS CHANGING PROCESSES S68

NO

S69 FINISH HIGHLIGHT REPRODUCTION OF MAIN GROUP? — NO

YES

MOVE TO NEXT THEME CLASSIFICATION S70

# FIG.15

```
┌─────────────────────────┐
│   THEME SELECTING       │
│   PROCESS START         │
└─────────────────────────┘
            │
            ▼
┌─────────────────────────┐
│   DISPLAY THEME         │──S80
│   SELECTION SCREEN      │
└─────────────────────────┘
            │
            ▼
┌─────────────────────────┐
│                         │──S81
│   DESIGNATE GROUP       │
└─────────────────────────┘
            │
            ▼
┌─────────────────────────┐
│   DESIGNATE THEME       │──S82
│   CLASSIFICATION (TIME, │
│   PLACE, OR KEYWORD)    │
└─────────────────────────┘
            │
            ▼
┌─────────────────────────┐
│                         │──S83
│   SELECT THEME          │
└─────────────────────────┘
            │
            ▼
┌─────────────────────────┐
│   SET THEME RANGE       │──S84
│   TO INITIAL VALUE      │
└─────────────────────────┘
            │
            ▼
    ┌───────────────┐
    │   RETURN      │
    └───────────────┘
```

# FIG.16

31

31A

31B

31B

31C

31D

32A

32B

32C

32

36A

35A

JUNE 12, 2001
AT MY HOME

35B

AUG 10, 2002
IN PARK NEARBY

36B

35C

NOV 2, 2002
AT AMUSEMENT
PARK

36C

30

35D

NOV 28, 2002
AT TOKUTOKU
ZOO

36D

37

35E

MARCH 20, 2003
AT ZOO

36E

35F

MARCH 30, 2003
AT PARK

36F

33  ◁ [3／5] ▷  34

# FIG.17

41C  41B  40

41A

MARCH 20, 2003
AT ZOO

(COMMENT)
CHASING SHEEP AND
GOAT AT NAKAYOSHI ZOO

32B  32
32C

32A  47U
48L
47D  48R

42A  43A  44A  45A

AT ASAHI
PARK

TITLE OF
MUSIC PIECE

TITLE OF
TV PROGRAM

TITLE OF
NEWS PROGRAM

42C  42B  43C  43B  44C  44B  45C  45B

EP 1 508 863 A2

# FIG.18

VARIOUS CHANGING
PROCESS START

S90

THEME CLASSIFICATION
CHANGING INSTRUCTION
EXISTS? — YES → CHANGE THEME CLASSIFICATION — S91

NO

S92

THEME CHANGING
INSTRUCTION EXISTS? — YES → SKIP THEME — S93

NO

S94

THEME RANGE CHANGING
INSTRUCTION EXISTS? — YES → CHANGE THRESHOLD — S95

NO

S96

HIGHLIGHT CHANGING
INSTRUCTION EXISTS? — YES → SKIP HIGHLIGHT — S97

NO

RETURN

# FIG.19

MARCH 30, 2003
AT ASAHI PARK

(COMMENT)
CHERRY BLOSSOMS ARE
ALMOST FULLY BLOOMING.
KENTA IS NOW DOING
EXERCISE WELL.

52A

51A

53A

54A

55A

AT ZOO

TITLE OF
MUSIC PIECE

TITLE OF
TV PROGRAM

TITLE OF
NEWS PROGRAM

EP 1 508 863 A2

FIG.20